# FASCICULE DE BREVET EUROPEEN

(11) **EP 3 768 523 B1**
(45) Date de publication et mention de la délivrance du brevet: **12.01.2022**
(21) Numéro de dépôt: 19713117.0
(22) Date de dépôt: 13.03.2019
(51) Int. Cl.: B60B 3/00, B60B 3/10, B60B 19/10

(54) **ROUE STRUCTURELLE DE VEHICULE A EFFET AERODYNAMIQUE ET VEHICULE COMPRENANT UNE TELLE ROUE**
STRUKTURRAD EINES FAHRZEUGS MIT AERODYNAMISCHER WIRKUNG UND FAHRZEUG MIT EINEM SOLCHEN RAD
STRUCTURAL WHEEL OF A VEHICLE HAVING AN AERODYNAMIC EFFECT, AND VEHICLE COMPRISING SUCH A WHEEL

(30) Priorité: 19.03.2018 FR 1852306
(43) Date de publication de la demande: 27.01.2021
(73) Titulaire: PSA Automobiles SA, 78300 Poissy (FR)
(72) Inventeur: PALPACUER, Eric, 75013 PARIS (FR); GILBERT, Vincent, 92400 COURBEVOIE (FR); VEYNANTE, Cyril, 78280 GUYANCOURT (FR); LAMOULIE, Didier, 28300 MAINVILLIERS (FR)
(86) Numéro de dépôt international: PCT/FR2019/050536
(87) Numéro de publication internationale: WO 2019/180346

(56) Documents cités:
- EP-A1- 1 980 419
- EP-A1- 3 103 652
- EP-A1- 3 153 328
- EP-B1- 1 980 419
- WO-A1-2017/103359
- WO-A1-2017/137673
- US-A1- 2012 080 932

## Description

L'invention concerne une roue de véhicule garnie d'un insert à effet aérodynamique, en particulier une roue dite « structurelle » de véhicule automobile, c'est-à-dire une roue qui est de masse optimisée et qui comporte des ajourages importants qui, sans préjudicier à sa tenue mécanique, laisse une grande latitude pour permettre des adaptations ou des personnalisations variées en réponse aux exigences particulières des clients ou usagers du véhicule fabriqué en série.

L'invention porte aussi sur un véhicule, en particulier un véhicule automobile, équipé d'au moins une telle roue garnie d'un tel insert.

On connaît les roues en tôle, structurelles et dépourvues de style, équipées d'enjoliveur appelé aussi « chapeau de roue », en matière métallique ou en matière plastique, par exemple en polyamide, qui est placé sur l'extérieur de la partie centrale de la roue d'un véhicule pour décorer : l'enjoliveur permet « d'habiller » la roue.

Ces roues ne présentent pas de caractéristiques aérodynamiques optimales, mais essentiellement des caractéristiques de style. En effet, l'enjoliveur présente un ajourage relativement important et impacte l'aérodynamique du véhicule.

On connaît également les roues équipées de différents types d'enjoliveurs dits « enjoliveurs aérodynamiques », qui permettent de réduire la traînée aérodynamique du véhicule. Ces enjoliveurs présentent, contrairement aux enjoliveurs précédents, un ajourage minimal qui a une incidence négative sur le refroidissement des freins.

On connaît aussi des roues ou des enjoliveurs de roue à pièces rapportées, pour réduire la traînée aérodynamique du véhicule ou bien pour permettre des effets décoratifs.

Ainsi, on connaît selon le document EP 3 153 328 A1, une roue structurelle comprenant des ajourages radiaux, chacun de ces ajourages étant garnis d'un insert comprenant une pale aérodynamique radiale prévue pour optimiser l'efficacité aérodynamique de la roue.

Toutefois, l'effet aérodynamique apporté par ces roues et leurs inserts reste insuffisant.

C'est pourquoi, la présente invention a notamment pour but de proposer une roue de véhicule qui permette d'améliorer la trainée aérodynamique comparée à l'état de la technique.

Un autre but de la présent est de proposer une roue de véhicule qui apporte un gain en CO₂ comparée à l'état de la technique. Les inventeurs ont constaté un gain aérodynamique de 3Dm² soit un gain en CO₂ estimé à 1.5 g/km.

C'est également un but de la présente invention de proposer une roue de véhicule qui soit fiable, économique et plus facilement personnalisable.

Pour atteindre au moins un des objectifs précités, l'invention propose une roue de véhicule, de préférence une roue structurelle de véhicule automobile. La roue présente de manière classique une jante cylindrique, un moyeu et un voile reliant ledit moyeu à ladite jante cylindrique. Le voile est doté d'une pluralité d'ajourages. La roue comprend au moins un insert amovible doté d'une première partie, dite aérodynamique, agencée dans au moins un ajourage, et comprenant au moins une pale aérodynamique configurée pour déplacer l'air d'un côté de la roue vers l'autre côté de la roue. Au moins un, en particulier chaque, ajourage et l'au moins une pale s'étendent radialement, respectivement suivant un premier axe et un second axe agencés, respectivement, à une première distance et à une seconde distance non-nulles du centre du moyeu.

Cette orientation des ajourages permet ainsi d'améliorer l'effet aérodynamique de la roue comparé à un ajourage radial. De même, le décalage de l'axe de la pale par rapport à la direction radiale passant par le centre du moyeu, augmente l'effet aérodynamique de la roue selon l'invention.

Au moins un insert comprend une seconde partie, dite d'obturation, agencée dans un des ajourages et configurée pour obturer ledit ajourage, la partie aérodynamique dudit insert étant agencée dans un autre ajourage, adjacent à l'ajourage recevant la partie d'obturation.

La partie d'obturation peut être configurée pour empêcher le passage d'air depuis et/ou vers la roue. Cet agencement permet de contrôler la trainée de la roue de façon plus simple.

En particulier, un ajourage recevant la partie d'obturation peut avoir des dimensions inférieures aux dimensions de l'ajourage recevant la partie aérodynamique.

Pour au moins un insert, la partie aérodynamique et la partie d'obturation peuvent être solidaires.

Avantageusement, la première distance et la seconde distance sont chacune comprises entre 10 et 100 mm.

La roue selon l'invention peut être réalisée en acier ou en aluminium. La roue selon l'invention peut être une roue droite ou une roue gauche d'un véhicule.

Selon un mode préféré de réalisation, l'au moins un insert peut comprendre une unique pale et le premier axe de l'au moins un ajourage recevant la partie aérodynamique de l'insert et le second axe de la pale peuvent être confondus.

De manière préférentielle, pour au moins un insert, l'au moins une pale peut former un angle avec un plan perpendiculaire à l'axe de rotation de la roue compris entre 2° et 30°, et en particulier égal à 8°, et plus particulièrement égal à 24°.

En particulier, la ligne de la pale se trouvant vers le côté extérieur de la roue peut définir l'axe de la pale et peut être confondue avec l'axe de l'ajourage.

Alternativement, la ligne de la pale se trouvant vers le côté intérieur de la roue peut définir l'axe de la pale et peut être confondue avec l'axe de l'ajourage.

Selon le sens d'orientation des pales aérodynamiques par rapport au plan précité et du sens de rotation de la roue, le déplacement d'air causé par la rotation de la roue est un mouvement aspirant, c'est-à-dire un mouvement d'air de la face extérieure de la roue vers la face intérieure de la roue, ou bien un mouvement soufflant, c'est-à-dire un mouvement d'air de la face intérieure de la roue vers la face extérieure de la roue.

Les inserts destinés à une roue droite du véhicule peuvent être symétriques aux inserts destinés à une roue gauche du véhicule identique et asymétrique à la roue droite. La roue selon l'invention est ainsi plus simple à réaliser et donc plus économique.

Avantageusement, au moins un insert peut comprendre des moyens de positionnement de l'insert pour permettre sa mise en position dans l'au moins un ajourage, lesdits moyens de positionnement étant formés par une collerette de positionnement destinée à s'emboiter dans la périphérie intérieure dudit au moins un ajourage.

En particulier, la collerette de positionnement peut être prolongée par un épaulement périphérique destiné à faire butée axiale contre le voile de la roue.

La collerette de positionnement peut être sensiblement inclinée vers l'intérieur de la roue de manière à former un déflecteur sur le pourtour interne de l'insert qui concentre et dirige le flux d'air dans l'ajourage correspondant de la roue.

Avantageusement, au moins un insert peut être fixé à la roue par un des moyens suivant : colle, vis de fixation, clips de fixation ou tout autre moyen de fixation similaire connu en soi.

Au moins une pale peut avoir une section transversale à profil en « aile d'avion ».

Préférentiellement, pour au moins un insert, l'au moins une pale peut présenter un profil de type « CLARCK Y ».

En variant, le profil de l'au moins une pale peut être un profil de type « JOUKOWSKI », ou bien un profil de type « NACA », symétrique ou cambré.

Selon un mode de réalisation, la roue selon l'invention peut comprendre un nombre paire d'ajourages et en ce que chaque paire d'ajourages est garnie d'un insert.

Pour chaque paire d'ajourages adjacentes, un ajourage peut comprendre la partie d'obturation de l'insert et l'autre ajourage peut comprendre la partie aérodynamique de l'insert.

L'insert peut être réalisé en polymères par des procédés de moulage ou d'usinage connus en soi.

Avantageusement, l'au moins un insert peut être, en partie ou en totalité, en matériau thermodurcissable.

La présente invention a aussi pour objet un véhicule comprenant au moins une roue conforme à celle décrite ci-dessus dans ses grandes lignes.

D'autres buts, avantages et particularités de l'invention apparaîtront à la lecture de la description détaillée de mises en œuvre et de modes de réalisation nullement limitatifs, et des dessins annexés suivants :
- la figure 1 est une représentation schématique d'une vue de face d'un exemple non limitatif d'une roue selon l'invention garnie d'un insert,
- la figure 2 est une vue en perspective d'une variante de l'exemple de la roue et de son insert, utilisée comme une roue droite, et
- la figure 3 est une vue en perspective d'une variante de l'exemple de la roue et de son insert, utilisée comme une roue gauche.

A des fins de clarté et de concision, les références sur les figures correspondent aux mêmes éléments.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

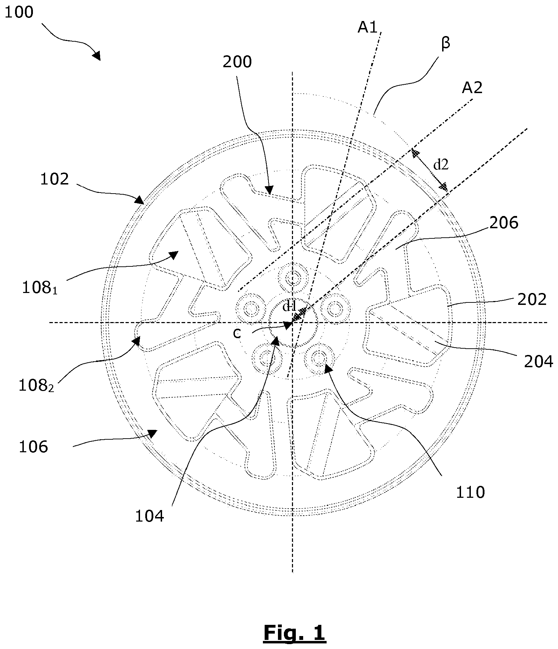

La figure 1 représente une vue de face d'un exemple non limitatif d'une roue selon l'invention garnie d'un insert.

La roue 100 représentée sur la figure 1 est une roue de véhicule automobile de type roue structurelle. La roue 100 peut être une roue droite ou gauche du véhicule.

La roue 100 comprend une jante cylindrique 102 située à la périphérie de la roue 100 et sur laquelle se fixe la bande de roulement rapportée.

La roue 100 comprend un moyeu 104 disposé au niveau du centre c de la roue 100 qui assure le guidage en rotation de la roue 100 par rapport au châssis du véhicule.

La roue 100 comprend aussi un voile 106 reliant la jante 102 au moyeu 104 et définissant des ajourages espacés entre eux, les ajourages ayant les dimensions les plus grandes sont désignés par la référence 108₁ et les ajourages les plus petits sont désignés par la référence 108₂.

Chaque ajourage 108₁ s'étend radialement suivant un premier axe A1 à une distance d1 non nulle du centre c du moyeu.

Ainsi les axes A1 des ajourages 108 ne sont pas des rayons de la roue. Cet agencement permet d'augmenter l'effet aérodynamique de la roue 100.

A titre d'exemple, la roue 100 comprend cinq paires d'ajourages successives, chaque paire comprend un ajourage 108₁ ayant une surface plus grande que l'autre ajourage 108₂.

La roue 100 comprend en outre des moyens de fixation 110 de la roue 100 à un essieu du véhicule.

La roue 100 comprend, pour chaque paire d'ajourages 108₁ et 108₂, un insert 200 comprenant une partie 202, dite aérodynamique, munie d'une pale 204 agencée dans l'ajourage 108₁ et une partie 206, dite d'obturation, agencée dans l'ajourage 108₂.

La pale 204 s'étend radialement suivant un second axe A2 à une distance d2 comprise entre 10 mm et 100 mm, en particulier égale à 72 mm, du centre c du moyeu. A titre d'exemple, le second axe A2 forme un angle β ave l'axe verticale de la roue 100 égal à 51°.

La roue 100 peut être une roue droite ou gauche du véhicule.

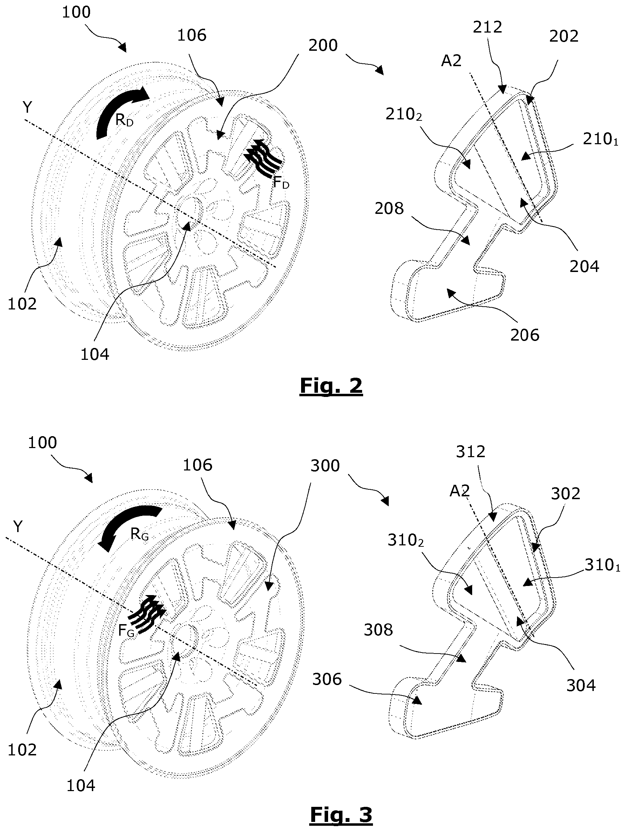

La figure 2 est une vue en perspective d'une variante de l'exemple de la roue et de son insert, utilisée comme une roue droite.

Le sens de rotation R_{D} de la roue 100 autour de son axe Y est un sens de rotation d'une roue droite.

L'insert 200 équipant la roue 100 droite est agencé pour déplacer l'air d'un côté extérieur de la roue 100 vers un côté intérieur selon un flux d'air F_{D} aspirant.

La pale 204 est orientée par rapport au plan perpendiculaire à l'axe de rotation Y de sorte à diriger l'air selon le flux F_{D}.

La pale 204 définie dans la partie aérodynamique 202 deux parties d'ajourage 210₁ et 210₂ prévues pour le passage d'air. Ces parties d'ajourage 210 sont identiques pour optimiser l'aspiration de l'air.

La ligne de la pale 204 dirigée vers le côté extérieur de la roue 100 défini l'axe A2 de la pale 204. Cet axe A2 est préférentiellement confondu avec l'axe A1 de l'ajourage 108₁ comprenant la partie aérodynamique 202 de l'insert 200.

En outre, la partie aérodynamique 202 est solidaire de la partie d'obturation 206 par le biais d'une liaison 208 prévue pour relier les deux parties 202 et 206 et être agencée sur le voile 106.

L'insert 200 comprend une collerette 212 de positionnement formée par la périphérie externe de l'insert 200, s'étendant sur la partie aérodynamique 202 et la partie d'obturation 206 et destinée à s'emboiter dans les ajourages 108₁ et 108₂.

La figure 3 est une vue en perspective d'une variante de l'exemple de la roue et de son insert, utilisée comme une roue gauche.

Le sens de rotation R_{G} de la roue 100 autour de son axe Y est un sens de rotation d'une roue gauche.

La roue 100 gauche est garnie d'un insert 300 symétrique à l'insert 200 équipant la roue 100 droite. L'insert 300 est agencé pour déplacer l'air d'un côté extérieur de la roue 100 vers un côté intérieur selon un flux d'air F_{G} aspirant.

L'insert 300 comprenant une partie 302, dite aérodynamique, munie d'une pale 304 agencée dans l'ajourage 108₁ et une partie 306, dite d'obturation, agencée dans l'ajourage 108₂.

La partie aérodynamique 302 est solidaire de la partie d'obturation 306 par le biais d'une liaison 308 prévue pour relier les deux parties 302 et 306 et être agencée sur le voile 106.

La pale 304 est orientée par rapport au plan perpendiculaire à l'axe de rotation Y de la roue, de sorte à diriger l'air selon le flux F_{G}.

La pale 304 définie dans la partie aérodynamique 302 deux parties d'ajourage 310₁ et 310₂ prévues pour le passage d'air. Ces parties d'ajourage 310 ont des surfaces identiques pour optimiser l'aspiration de l'air.

La ligne de la pale 304 dirigée vers le côté intérieur de la roue 100 défini l'axe A2 de la pale 304. Cet axe A2 est préférentiellement confondu avec l'axe A1 de l'ajourage 108₁ comprenant la partie aérodynamique 302 de l'insert 300.

L'insert 300 comprend une collerette 312 de positionnement formée par la périphérie externe de l'insert 300, s'étendant sur la partie aérodynamique 302 et la partie d'obturation 306 et destinée à s'emboiter dans les ajourages 108₁ et 108₂.

La roue 100 présentée ci-dessus dans un mode de réalisation particulier présente de nombreux avantages, parmi les avantages suivant :
- une optimisation de la trainée aérodynamique du véhicule qu'elle équipe,
- un gain aérodynamique de 3 Dm² soit un gain en CO₂ de 1.5 g/km,
- un coût réduit en termes de fabrication et d'entretien car la roue est interchangeable entre roue droite et roue gauche en changeant uniquement l'insert par un insert symétrique à ce dernier,
- une personnalisation plus simple avec un large choix de styles, par exemple, en changeant l'aspect visuel de l'insert.

## Revendications

1. Roue (100) de véhicule, de préférence une roue structurelle de véhicule automobile, ladite roue (100) présentant une jante cylindrique (102), un moyeu (104) et un voile (106) reliant ledit moyeu (104) à ladite jante cylindrique (102), le voile (106) étant doté d'une pluralité d'ajourages (108₁, 108₂), ladite roue (100) comprenant au moins un insert (200, 300) amovible doté d'une première partie (202, 302), dite aérodynamique, agencée dans au moins un ajourage (108₁), et comprenant au moins une pale aérodynamique (204, 304) configurée pour déplacer l'air d'un côté de ladite roue (100) vers l'autre côté de ladite roue (100) ;
au moins un, en particulier chaque, ajourage (108₁, 108₂) et l'au moins une pale (204, 304)) s'étendant, radialement, respectivement suivant un premier axe (A1) et un second axe (A2) agencés respectivement à une première distance (d1) et à une seconde distance (d2) non-nulles du centre (c) du moyeu, **caractérisée en ce que** l'au moins un insert (200, 300) comprend une seconde partie (206, 306), dite d'obturation, agencée dans un des ajourages (108₂) et configurée pour obturer ledit ajourage (108₂), la partie aérodynamique (204, 304) dudit insert (200, 300) étant agencée dans un autre ajourage (108₁), adjacent audit ajourage (108₂) recevant la partie d'obturation (206, 306).

2. Roue (100) selon la revendication précédente, **caractérisée en ce que**, la première distance (d1) et la seconde distance (d2) sont chacune comprises entre 10 et 100 mm.

3. Roue (100) selon l'une quelconque des revendications précédentes, **caractérisée en ce que** l'au moins un insert (200, 300) comprend une unique pale (204, 304) et **en ce que** le premier axe (A1) de l'au moins un ajourage (108₁) recevant la partie aérodynamique (202, 302) dudit insert (200, 300) et le second axe (A2) de ladite pale (204, 304) sont confondus.

4. Roue (100) selon l'une quelconque des revendications précédentes, **caractérisée en ce que**, pour au moins un insert (200, 300), l'au moins une pale (204, 304) forme un angle avec un plan perpendiculaire à l'axe (Y) de rotation de la roue (100) compris entre 2° et 30°, et préférentiellement de 8°.

5. Roue (100) selon l'une quelconque des revendications précédentes, **caractérisée en ce qu'**au moins un insert (200, 300) comprend des moyens de positionnement dudit insert (200, 300) pour permettre sa mise en position dans l'au moins un ajourage (108₁, 108₂), lesdits moyens de positionnement étant formés par une collerette (212, 312) de positionnement destinée à s'emboiter dans la périphérie intérieure dudit au moins un ajourage (108₁, 108₂).

6. Roue (100) selon l'une quelconque des revendications précédentes, **caractérisée en ce que**, pour au moins un insert (200, 300), l'au moins une pale (204, 304) présente un profil de type « CLARCK Y ».

7. Roue (100) selon l'une quelconque des revendications précédentes, **caractérisée en ce qu'**elle comprend un nombre pair d'ajourages (108₁, 108₂) et **en ce que** chaque paire d'ajourages (108₁, 108₂) est garnie d'un insert (200, 300).

8. Roue (100) selon l'une quelconque des revendications précédentes, **caractérisée en ce que** l'au moins un insert (200, 300) est en matériau thermodurcissable.

9. Véhicule comprenant au moins une roue (100) selon l'une quelconque des revendications précédentes.

## Patentansprüche

1. Fahrzeugrad (100), vorzugsweise ein strukturelles Kraftfahrzeugrad, wobei das Rad (100) eine zylindrische Felge (102), eine Nabe (104) und einen Steg (106) aufweist, der die Nabe (104) mit der zylindrischen Felge (102) verbindet, wobei die Bahn (106) mit einer Vielzahl von Ausschnitten (108 ₁, 108 ₂) versehen ist, wobei das Rad (100) mindestens einen entfernbaren Einsatz (200, 300) umfasst, der mit einem ersten Teil (202, 302) versehen ist, genannt aerodynamisch , angeordnet in mindestens einem Ausschnitt (108 ₁) und mit mindestens einem aerodynamischen Flügel (204, 304), der konfiguriert ist, um die Luft von einer Seite des Rads (100) zu der anderen Seite des Rads (100) zu bewegen ;
mindestens eine, insbesondere jede, Perforation (108 ₁, 108 ₂) und mindestens eine sich radial jeweils entlang einer ersten Achse (A1) und einer zweiten Achse (A2) erstreckende Schaufel (204, 304) jeweils an einem ersten Abstand (d1) und in einem zweiten von Null verschiedenen Abstand (d2) von der Mitte (c) der Nabe, **dadurch gekennzeichnet, dass** der mindestens eine Einsatz (200, 300) einen zweiten Teil (206, 306), genannt Schalung, umfasst, angeordnet in einer der Öffnungen (108 ₂) und zum verschließen der konfiguriert ist , Öffnungen (108 ₂), der aerodynamische Teil (204, 304) des Einsatzes (200, 300) in einer anderen Öffnungen (108 ₁), angrenzend dass die Aussparung (108 ₂) das Verschlussteil (206, 306) aufnimmt.

2. Rad (100) nach dem vorhergehenden Anspruch, **dadurch gekennzeichnet, dass** der erste Abstand (d1) und der zweite Abstand (d2) jeweils zwischen 10 und 100 mm betragen.

3. Rad (100) nach einem der vorhergehenden Ansprüche, **dadurch gekennzeichnet, dass** der mindestens eine Einsatz (200, 300) ein einzelnes Messer (204, 304) umfasst und dass die erste Achse (A1) des mindestens einen Ausschnitts (108 ₁), die den aerodynamischen Teil (202, 302) des Einsatzes (200, 300) aufnehmen, und die zweite Achse (A2) des Flügels (204, 304) fallen zusammen.

4. Rad (100) nach einem der vorhergehenden Ansprüche, **dadurch gekennzeichnet, dass** bei mindestens einem Einsatz (200, 300) das mindestens eine Messer (204, 304) einen Winkel mit einer zur Achse senkrechten Ebene (Y) der Drehung des Rades (100) zwischen 2° und 30°, und vorzugsweise 8°.

5. Rad (100) nach einem der vorhergehenden Ansprüche, **dadurch gekennzeichnet, dass** mindestens ein Einsatz (200, 300) Mittel zum Positionieren des Einsatzes (200, 300) umfasst, um seine Positionierung in dem mindestens einen Ausschnitt (108 ₁, 108 ₂), wobei die Positionierungsmittel durch einen Positionierungskragen (212, 312) gebildet werden, der dazu bestimmt ist, in den Innenumfang des mindestens einen Ausschnitts (108 ₁, 108 ₂) zu passen.

6. Rad (100) nach einem der vorhergehenden Ansprüche, **dadurch gekennzeichnet, dass** für mindestens einen Einsatz (200, 300) mindestens eine Schaufel (204, 304) ein Profil vom Typ " CLARCK Y " aufweist.

7. Rad (100) nach einem der vorhergehenden Ansprüche, **dadurch gekennzeichnet, dass** es eine gerade Anzahl von Öffnungen (108 ₁, 108 ₂) umfasst und dass jedes Paar von Öffnungen (108 ₁, 108 ₂) mit einem Einsatz (200, 300).

8. Rad (100) nach einem der vorhergehenden Ansprüche, **dadurch gekennzeichnet, dass** der mindestens eine Einsatz (200, 300) aus duroplastischem Material besteht.

9. Fahrzeug mit mindestens einem Rad (100) nach einem der vorhergehenden Ansprüche.

## Claims

1. Vehicle wheel (100), preferably a structural motor vehicle wheel, said wheel (100) having a cylindrical rim (102), a hub (104) and a web (106) connecting said hub (104) to said cylindrical rim (102), the web (106) being provided with a plurality of cutouts (108 ₁, 108 ₂), said wheel (100) comprising at least one removable insert (200, 300) provided with a first part (202 , 302), called aerodynamic, arranged in at least one cutout (108 ₁), and comprising at least one aerodynamic blade (204, 304) configured to move the air from one side of said wheel (100) to the other side of said wheel (100) ;
at least one, in particular each, perforation (108 ₁, 108 ₂) and at least one blade (204, 304) extending, radially, respectively along a first axis (A1) and a second axis (A2) arranged respectively at a first distance (d1) and at a second non-zero distance (d2) from the center (c) of the hub, **characterized in that** the at least one insert (200, 300) comprises a second part (206, 306), called shuttering, arranged in one of the openings (108 ₂) and configured to close off said openings (108 ₂), the aerodynamic part (204, 304) of said insert (200, 300) being arranged in another openings (108 ₁), adjacent to said cutout (108 ₂) receiving the closure part (206, 306).

2. Wheel (100) according to the preceding claim, **characterized in that** the first distance (d1) and the second distance (d2) are each between 10 and 100 mm.

3. Wheel (100) according to any one of the preceding claims, **characterized in that** the at least one insert (200, 300) comprises a single blade (204, 304) and **in that** the first axis (A1) of the at least one cutout (108 ₁) receiving the aerodynamic part (202, 302) of said insert (200, 300) and the second axis (A2) of said blade (204, 304) are coincident.

4. Wheel (100) according to any one of the preceding claims, **characterized in that**, for at least one insert (200, 300), the at least one blade (204, 304) forms an angle with a plane perpendicular to the axis (Y) of rotation of the wheel (100) between 2 ° and 30 °, and preferably 8 °.

5. Wheel (100) according to any one of the preceding claims, **characterized in that** at least one insert (200, 300) comprises means for positioning said insert (200, 300) to allow its positioning in the at least a cutout (108 ₁, 108 ₂), said positioning means being formed by a positioning collar (212, 312) intended to fit into the inner periphery of said at least one cutout (108 ₁, 108 ₂).

6. Wheel (100) according to any one of the preceding claims, **characterized in that**, for at least one insert (200, 300), at least one blade (204, 304) has a" CLARCK Y " type profile.

7. Wheel (100) according to any one of the preceding claims, **characterized in that** it comprises an even number of openings (108 ₁, 108 ₂) and **in that** each pair of openings (108 ₁, 108 ₂) is topped with an insert (200, 300).

8. Wheel (100) according to any one of the preceding claims, **characterized in that** the at least one insert (200, 300) is made of thermosetting material.

9. Vehicle comprising at least one wheel (100) according to any one of the preceding claims.
